# EUROPÄISCHE PATENTSCHRIFT

(11) **EP 3 387 081 B1**
(45) Veröffentlichungstag und Bekanntmachung des Hinweises auf die Patenterteilung: **18.02.2026**
(21) Anmeldenummer: 16816583.5
(22) Anmeldetag: 01.12.2016
(51) Int. Cl.: C09J 5/02, H02K 15/02, B32B 15/00, F16B 11/00

(54) **VERFAHREN ZUR HERSTELLUNG VON LAMELLENPAKETEN**
METHOD FOR PRODUCING PLATE PACKS
PROCÉDÉ POUR LA FABRICATION DE PILES DE STRUCTURES STRATIFIÉES

(30) Priorität: 09.12.2015 DE 102015016338
(43) Veröffentlichungstag der Anmeldung: 17.10.2018
(73) Patentinhaber: Feintool International Holding AG, 3250 Lyss (CH)
(72) Erfinder: Björn, Böker, 73728 Esslingen (DE)
(74) Vertreter: Jackisch-Kohl, Anna-Katharina
(86) Internationale Anmeldenummer: PCT/EP2016/002018
(87) Internationale Veröffentlichungsnummer: WO 2017/097404

(56) Entgegenhaltungen:
- EP-A1- 1 731 578
- EP-A2- 2 897 254
- EP-A2- 3 021 466
- JP-A- 2009 084 390
- JP-A- S6 018 560
- US-A1- 2014 102 486
- ANONYMUS: "EU-Sicherheitsdatenblatt Dipropylenglykol (DPG)", 19 August 2021 (2021-08-19), pages 1 - 10, XP093186425, Retrieved from the Internet <URL:https://www.liquichem.de/downloads.html?file=files/uploads/download/01c_glykole-propylenglykole/DPG_Sicherheitsdatenblatt.pdf> [retrieved on 20240716]
- ANONYMUS: "Propylenglycol", SICHERHEITSDATENBLATT, 20 November 2015 (2015-11-20), Hilden, pages 1 - 4, XP055354527, Retrieved from the Internet <URL:http://www.caelo.de/getfile.html?type=sdb&num=2554> [retrieved on 20170314]

## Beschreibung

Die Erfindung betrifft ein Verfahren zur Herstellung von Lamellenpaketen nach dem Oberbegriff des Anspruches 1.

In elektrischen Maschinen werden häufig Blechpakete aus gestapelten Lamellen eingesetzt, die aus geschnittenen Elektroblechen oder Elektrobändern hergestellt sind. Üblicherweise werden zum Schneiden der Lamellen eine Stanzpresse mit Werkzeug oder eine Laserschneidmaschine eingesetzt. Die Elektrobleche/bänder als Ausgangsprodukte sind in der Regel mit einer dünnen elektrischen Isolationsschicht überzogen, deren Dicke im µm-Bereich liegt. Diese Isolationsschichten bestehen aus organischem oder anorganischem Material. Auch werden Hybridbeschichtungen eingesetzt, die aus organischen und anorganischen Anteilen bestehen. Für die elektrischen Isolationsschichten werden Lacke eingesetzt, die so eingestellt sind, dass sie sich jeweils positiv auf die Schneidverfahren und Paketierverfahren auswirken.

Die Lamellenpakete werden für Statoren und Rotoren von elektrischen Maschinen, wie Elektromotoren oder Generatoren, verwendet. Damit die aufeinander liegenden Lamellen innerhalb des Lamellenpaketes fest miteinander verbunden sind, ist es bekannt, die aufeinander liegenden Lamellen mittels eines Klebstoffes miteinander zu verbinden. Die elektrischen Isolationsschichten führen mitunter dazu, dass eine sichere Verklebung aufeinander liegender Lamellen nicht gewährleistet ist. Mitunter wird die Reaktionszeit des Klebstoffes verlängert. Dies wirkt sich beispielsweise bei einer Stanzvorrichtung auf die Hubzahl aus, da sie sich nach der Abbindezeit des Klebstoffes richtet.

Bei einem bekannten Verfahren (EP 2 897 254 A2) werden die aufeinander liegenden Lamellen innerhalb des Lamellenpaketes mittels eines Klebemittels miteinander verbunden. Wie die Verbindung zwischen den aufeinander liegenden Lamellen vorgenommen wird, ist nicht beschrieben.

Es ist weiter bekannt (JP S60 18560 A), auf eine Oberfläche eines Produktes einen Klebstoff aufzubringen.

Der Erfindung liegt die Aufgabe zugrunde, das gattungsgemäße Verfahren so auszubilden, dass eine zuverlässige Klebeverbindung zwischen den Lamellen innerhalb des Lamellenpaketes sichergestellt ist, wobei die Reaktionszeit des Klebstoffes möglichst unbeeinflusst von dem für die Lamellen verwendeten Ausgangsprodukt sein soll.

Diese Aufgabe wird beim gattungsgemäßen Verfahren erfindungsgemäß mit den kennzeichnenden Merkmalen des Anspruches 1 gelöst.

Beim erfindungsgemäßen Verfahren wird auf das flächige Ausgangsprodukt, das ein Elektroband oder ein Elektroblech sein kann, die Benetzungsschicht aufgebracht. Sie sorgt dafür, dass der hochtemperaturbeständige Cyanacrylat-Klebstoff sich auf der Benetzungsschicht so ausbreiten kann, dass sich eine gute Benetzung ergibt. Sie sorgt für eine sichere und schnelle Verbindung der Lamellen untereinander. Die Benetzungsschicht wird so eingestellt, dass ihr pH-Wert größer als 7 ist, also im alkalischen Bereich liegt und der HO⁻-Anteil in der Benetzungsschicht ausreichend hoch ist. Dadurch wird erreicht, dass die Abbindezeit bzw. Reaktionszeit des Klebstoffes klein gehalten werden kann. Wird zum Schneiden der Lamellen beispielhaft eine Stanzvorrichtung verwendet, dann können aufgrund der geringen Reaktionszeiten des Klebstoffes sehr hohe Hubzahlen erreicht werden, so dass die Stanzvorrichtung mit einer hohen Leistung arbeiten kann. Hochtemperaturbeständige Cyanacrylat-Klebstoffe sind insbesondere Ethyl- und Allyl-Cyanacrylate.

Die Benetzungsschicht besteht aus Dipropylenglykol, destilliertem und/oder entmineralisiertem und/oder deionisiertem Wasser. Eine solche Zusammensetzung der Benetzungsschicht hat den weiteren Vorteil, dass sie als Schmierstoff beim Schneidvorgang dienen kann. Er wirkt sich verschleißmindernd auf das Stanzwerkzeug aus, so dass das Stanzwerkzeug eine lange Einsatzdauer hat.

Außerdem hat eine solche Benetzungsschicht den zusätzlichen Vorteil, dass sie das Ausgangsprodukt vor Korrosion schützt.

Die Benetzungsschicht ist auf einer elektrischen Isolationsschicht vorgesehen, welche die Lamelle bedeckt und auf beiden Seiten des Ausgangsproduktes vorhanden ist.

Die Benetzungsschicht enthält zwischen etwa 30 und 75 Gew.-% destilliertes und/oder entmineralisiertes und/oder deionisiertes Wasser und etwa 25 bis 70 Gew.-% Dipropylenglykol Mit dem Anteil an Wasser lässt sich der pH-Wert der Benetzungsschicht sehr einfach auf den jeweiligen Einsatzfall anpassen, so dass stets gewährleistet werden kann, dass der Klebstoff innerhalb sehr kurzer Zeiten prozesssicher und einwandfrei reagiert.

Wässrige Lösungen sind alkalisch, wenn die Konzentration der Hydroxid-Ionen OH⁻ die der Oxonium-Ionen H₃O⁺ übersteigt. Der pH-Wert ist dann größer als 7.

Vorteilhaft wird nur destilliertes oder nur entmineralisiertes oder nur deionisiertes Wasser für die Benetzungsschicht eingesetzt. Werden alle Arten von Wasser für die Benetzungsschicht verwendet, dann liegt ihr Gesamtanteil innerhalb des angegebenen Bereiches von etwa 30 bis etwa 75 Gew.-%.

Die Benetzungsschicht wird bei einer vorteilhaften Ausführungsform im Sprühverfahren auf das Ausgangsprodukt aufgebracht. Dadurch ist sichergestellt, dass die Benetzungsschicht gleichmäßig auf das Ausgangsprodukt aufgebracht wird. Hierbei wird das Ausgangsprodukt selbst nicht beansprucht.

Die Benetzungsschicht kann auch durch Bürsten auf das Ausgangsprodukt aufgebracht werden. Mit dem Bürsten lässt sich die Oberfläche des Ausgangsproduktes in gewissem Maße reinigen, so dass eine zuverlässige Reaktion zwischen der Benetzungsschicht und dem Klebstoff gewährleistet ist.

Die Benetzungsschicht kann schließlich auch durch Polieren auf das Ausgangsprodukt aufgebracht werden.

Mit Hilfe eines festen Zusatzstoffes, beispielsweise Diamant, in der Flüssigkeit kann die Oberfläche mittels Polieren oder Bürsten geglättet werden. In einem vorteilhaften Verfahren werden nur die Oberflächenspitzen der Isolationsschicht im Mikrobereich abgetragen. Die Isolationswirkung der Isolationsschicht bleibt aufrechterhalten.

Vorteilhaft ist es, wenn die Benetzungsschicht vollflächig auf das Ausgangsprodukt aufgebracht wird. Dann ist das gesamte Ausgangsprodukt durch die Benetzungsschicht abgedeckt, wodurch ein optimaler Korrosionsschutz, eine hervorragende Schmierung beim Stanzprozess sowie eine optimale Benetzung durch den Klebstoff gewährleistet sind.

Wird die Benetzungsschicht auf beide Seiten des flächigen Ausgangsproduktes aufgebracht, ist der Korrosionsschutz des Ausgangsproduktes optimal. Außerdem ist es dadurch möglich, den Klebstoff wahlweise auf eine der beiden Seiten des Ausgangsproduktes aufzubringen.

Bei einer vorteilhaften Ausführungsform wird die Benetzungsschicht in Vorschubrichtung des Ausgangsproduktes vor einer Stanzvorrichtung oder einer entsprechenden Schneidvorrichtung auf das Ausgangsprodukt aufgebracht. Der nachfolgende Auftrag des Klebstoffes kann dann einfach und ohne Behinderung durch den Auftrag der Benetzungsschicht vorgenommen werden. Insbesondere können die entsprechenden Auftrageinheiten für die Benetzungsschicht und für den Klebstoff konstruktiv einfach ausgebildet werden, da sie örtlich getrennt voneinander angeordnet sind.

Es besteht auch die Möglichkeit, die Benetzungsschicht mittels wenigstens einer Auftrageinheit auf das Ausgangsprodukt aufzubringen, die sich an einem Stanzwerkzeug befindet. In diesem Falle kann die zur Durchführung des Verfahrens eingesetzte Anlage verhältnismäßig kompakt gebaut werden. Hierbei ist ebenfalls vorgesehen, dass zunächst die Benetzungsschicht aufgebracht wird, bevor anschließend der Klebstoff auf die Benetzungsschicht aufgebracht wird.

Die für den Klebstoff vorgesehene Auftrageinheit kann vorteilhaft am Stanzwerkzeug vorgesehen sein. Dies ist im Hinblick auf die kurzen Reaktionszeiten des Klebstoffes von Vorteil, weil zwischen dem Auftrag des Klebstoffes und dem Ausschneiden der Lamelle und Anordnen auf dem Lamellenpaket nur eine geringe Zeit benötigt wird. Dadurch ist sichergestellt, dass der Klebstoff erst dann reagiert, wenn die Lamelle mit dem aufgebrachten Klebstoff auf das Lamellenpaket gedrückt wird.

Im Hinblick auf hohe Taktzahlen beim Herstellen der Lamellen ist es weiter vorteilhaft, wenn der Klebstoff und die Benetzungsschicht unmittelbar vor oder nach dem Ausschneiden aus dem Ausgangsprodukt auf die Lamelle aufgebracht werden.

Bei einem bandförmigen Ausgangsprodukt besteht eine vorteilhafte Verfahrensweise darin, dass die Benetzungsschicht in Vorschubrichtung des Ausgangsproduktes nach dem Beschichten und vor dem Aufwickeln auf eine Haspel auf das Ausgangsprodukt aufgebracht wird. Dies hat den Vorteil, dass beim Schneid- bzw. Stanzvorgang nur noch der Klebstoff aufgebracht werden muss.

Bei einer anderen vorteilhaften Verfahrensweise wird die Benetzungsschicht, wenn ein bandförmiges Ausgangsprodukt eingesetzt wird, in Vorschubrichtung des Ausgangsproduktes vor dem Spalten des Bandes aufgebracht.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1 bis 3: jeweils in schematischer Darstellung verschiedene Anlagen zur Durchführung des erfindungsgemäßen Verfahrens,
- Fig. 4: in schematischer und vergrößerter Darstellung einen Schnitt durch ein in einer Bremseinheit einer Stanzvorrichtung liegendes Lamellenpaket,
- Fig. 5: einen Schnitt durch eine Stanzvorrichtung im Bereich der Bremseinheit.
- Fig. 6: in stark vergrößerter Darstellung sowohl im Schnitt als auch in Draufsicht ein Elektroband bzw. eine Elektroblech, das auf beiden Seiten mit einer Benetzungsschicht versehen ist,
- Fig. 7 und Fig. 8: in einer Darstellung entsprechend Fig. 6 eine zweite Ausführungsform eines Elektrobleches oder Elektrobandes ,
- Fig. 9: in schematischer Darstellung das Elektroblech bzw. Elektroband gemäß den Fig. 7 und 8 in einem Stanzwerkzeug, dessen Werkzeugoberteil eine Ausgangslage einnimmt,
- Fig. 10: in einer Darstellung entsprechend Fig. 9 das Werkzeugoberteil in seiner Endstellung, wobei ein Teil des Kontaktbereiches zwischen der Benetzungsschicht und einem Werkzeugunterteil stark vergrößert dargestellt ist,
- Fig. 11: in schematischer Darstellung eine Vorrichtung zum Aufbringen einer Beschichtung und einer Benetzungsschicht auf ein Elektroband,
- Fig. 12: in einer Darstellung entsprechend Fig. 11 eine zweite Ausführungsform zum Aufbringen einer Benetzungsschicht auf ein Elektroband.

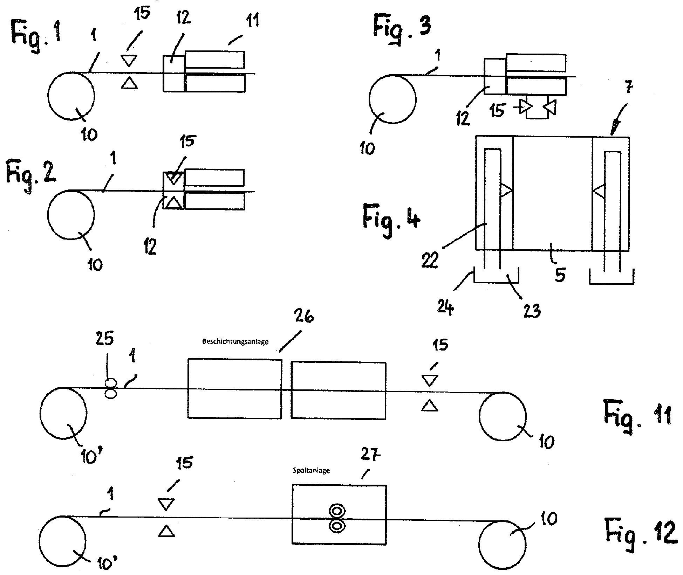

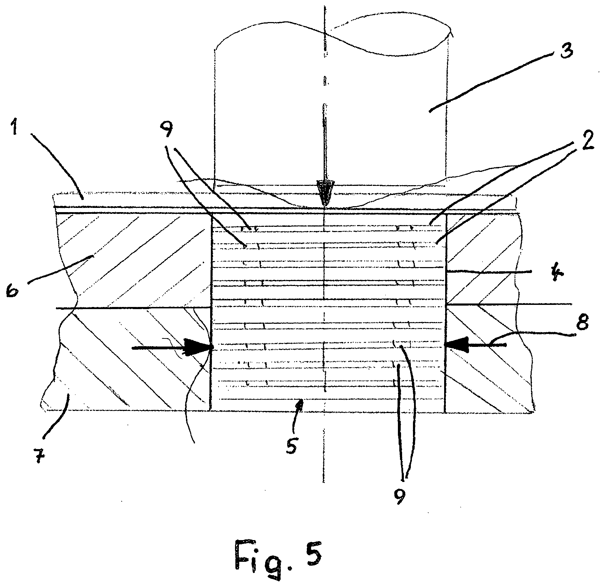

Fig. 1 zeigt in schematischer Darstellung eine Vorrichtung, mit der aus einem Elektroband 1 oder einem Elektroblech in bekannter Weise Lamellen 2 geschnitten werden (Fig. 5). Beispielhaft zeigt Fig. 5 einen Stempel 3 einer Stanzvorrichtung 11, mit dem aus dem Elektroband 1 die Lamellen 2 gestanzt werden. Sie werden in einem Schacht 4 der Stanzvorrichtung 11 zu einem Lamellenpaket 5 gestapelt. Der Schacht 4 erstreckt sich durch eine Matrize 6 der Stanzvorrichtung 11. Im Schacht 4 befindet sich in bekannter Weise eine Bremseinheit 7, die ringförmig ausgebildet ist und auf die Lamellen 2 bzw. das Lamellenpaket 5 eine radiale Bremskraft 8 in bekannter Weise ausübt. Diese Bremskraft ist so hoch, dass der Stempel 3 die jeweils ausgestanzte Lamelle 2 unter ausreichendem Druck auf das im Schacht 4 befindliche Lamellenpaket 5 drücken kann, so dass die aufeinander liegenden Lamellen 2 in noch zu beschreibender Weise fest miteinander verbunden werden können. In Fig. 5 ist beispielhaft dargestellt, dass sich zwischen benachbarten Lamellen 2 innerhalb des Lamellenpaketes 5 Klebepunkte 9 befinden, über welche die aufeinander liegenden Lamellen 2 fest miteinander verbunden werden.

Zusätzlich zur Klebeverbindung können die aufeinander liegenden Lamellen 2 auch formschlüssig miteinander verbunden sein, beispielsweise durch aus der Lamelle herausgedrückte Erhöhungen oder teilweise herausgestanzte Zungen, die in entsprechende Vertiefungen bzw. Ausnehmungen der jeweils benachbarten Lamelle eingreifen.

Das Lamellenpaket 5 wird zur Herstellung von Rotoren und/oder Statoren von Elektromotoren sowie auch Generatoren eingesetzt.

Wie aus Fig. 1 hervorgeht, ist das Elektroband 1 auf einer Haspel 10 aufgewickelt, die um ihre Achse drehbar ist. Das von der Haspel 10 abgewickelte Elektroband 1 wird durch einen (nicht dargestellten) Richtapparat geführt, durch den das Elektroband 1 für den nachfolgenden Stanzprozess gerichtet wird. Nach dem Richtapparat gelangt das Elektroband in die Stanzvorrichtung 11, in der in der beschriebenen Weise aus dem Elektroband 1 die Lamellen 2 gestanzt werden.

In die Stanzvorrichtung 11 können auch zwei oder mehr Elektrobänder 1 nebeneinander geführt werden, so dass gleichzeitig aus den einzelnen Elektrobändern 1 die Lamellen 2 gestanzt werden können. Weiter ist es möglich, die Lamellen 2 im Elektroband 1 nicht nur in einer Spur, sondern beispielsweise auch in zwei Spuren zu stanzen.

Die Stanzvorrichtung 11 ist mit einem oder mehreren entsprechenden Stanzwerkzeugen in Form der Stempel 3 versehen. Die mit ihnen gestanzten Lamellen 2 gelangen in der beschriebenen Weise in den Schacht 4, in den die Lamellen 2 unmittelbar nach dem Stanzen durch den Stempel 3 gedrückt werden. Der Schacht 4 bildet die Aufnahme für das Lamellenpaket 5. Die Bremseinheit 7 sorgt dafür, dass die Lamellen 2 mit ihrem Rand unter Reibung an der Innenwand des Schachtes 4 anliegen, so dass sie nicht aus dem Schacht 4 fallen können. Bei jedem Stanzhub wird die jeweils gestanzte Lamelle 2 nach unten auf die bereits im Schacht 4 befindlichen Lamellen gedrückt. In den Schacht 4 ragt ein (nicht dargestellter) Abstützstempel, auf dem die Lamellen 2 zum Lamellenpaket 5 gestapelt werden. Mit jedem Stanzhub wird der Abstützstempel schrittweise nach unten bewegt, so dass die jeweils gestanzte Lamelle 2 so weit nach unten in den Schacht 4 bewegt werden kann, dass die nachfolgende zu stanzende Lamelle 2 zuverlässig in den Schacht 4 gedrückt werden kann.

Bei mehreren gleichzeitig durch die Stanzvorrichtung 11 geführten Elektrobändern 1 ist es von Vorteil, wenn jedem Elektroband 1 ein Schacht 4 zugeordnet ist, so dass in der Stanzvorrichtung 11 gleichzeitig mehrere Lamellenpakete nebeneinander gestapelt werden können. Es besteht aber auch die Möglichkeit, in der Stanzvorrichtung 11 nur einen Schacht 4 vorzusehen, in den die aus verschiedenen Elektrobändern 1 gestanzten Lamellen 2 mittels einer Transporteinrichtung, beispielsweise einer Dreheinheit, in den Bereich oberhalb des Schachtes 4 gefördert und dann in den Schacht 4 gedrückt werden. Eine solche Transporteinrichtung ist insbesondere dann von Vorteil, wenn aus einem Elektroband 1 in nebeneinander liegenden Spuren die Lamellen 2 ausgestanzt werden. Dann können die nebeneinander liegenden Lamellen 2 mit einer solchen Transporteinheit in den einzigen Schacht 4 transportiert werden.

Innerhalb des Lamellenpaketes 5 werden die aufeinander liegenden Lamellen 2 durch ein Klebemittel fest miteinander verbunden. Bei der beispielhaften Ausführungsform gemäß Fig. 1 wird das Klebemittel mittels einer Auftrageinheit 12 noch vor dem Stanzen der Lamellen 2 auf das Elektroband 1 in bekannter Weise aufgebracht. Das Klebemittel kann auf verschiedene Weise auf das Elektroband 1 aufgebracht werden, beispielsweise berührungsfrei durch Aufsprühen oder auch durch Auftragen mittels einer Walze, einer Rolle und dergleichen. Hierbei kann das Klebemittel flächig, aber auch nur punktuell oder streifenförmig auf das Elektroband 1 aufgetragen werden. Je nach Größe der Lamelle 2 ist eine unterschiedliche Menge an Klebemittel erforderlich, um innerhalb des Lamellenpaketes 5 die Lamellen 2 fest miteinander zu verbinden. Bevorzugt wird das Klebemittel punktuell auf das Elektroband 1 aufgebracht.

Als Klebemittel werden hochtemperaturbeständige Cyanacrylat-Klebstoffe eingesetzt. Als solche Klebstoffe kommen Ethyl- oder Allyl-Cyanacrylate in Betracht. Sie sind lösemittelfreie, kalthärtende 1-Komponentenkleber, die schnell polymerisieren und innerhalb kurzer Zeit aushärten. Diese Cyanacrylat-Klebstoffe haben eine hohe Temperaturbeständigkeit, die mindestens 130°C beträgt, vorzugsweise bis zu etwa 150°C und höher reicht.

Allyl Cyanacrylat kann bei geringen Belastungen kurzzeitig auch höheren Temperaturen ausgesetzt werden. Nach etwa zwei Stunden erreicht die Verklebung einen Temperaturwiderstand bis zu 250°C. Auch Ethyl-Cyanacrylate können kurzzeitig bei höheren Temperaturen eingesetzt werden, wenn die Belastungen geringer sind.

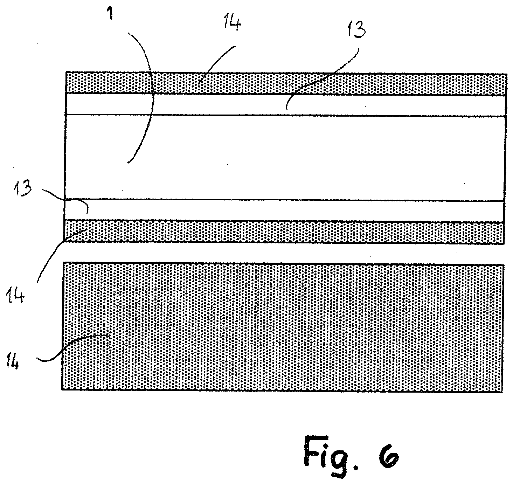

Das Elektroband bzw. auch für die Herstellung der Lamellen 2 eingesetzte Elektrobleche sind mit einer Beschichtung 13 versehen (Fig. 6), die eine elektrische Isolationsschicht bildet und auf beiden Seiten des Elektrobandes 1 vorhanden ist. Die elektrischen Isolationsschichten 13 haben nur eine sehr geringe Dicke, die im µm-Bereich liegt. Die Isolationsschichten 13 bestehen vorzugsweise aus rein organischen oder rein anorganischen Materialien. Es können auch Hybridbeschichtungen eingesetzt werden, die aus organischen und anorganischen Anteilen bestehen. Solche Isolationsschichten für Elektrobänder 1 bzw. Elektrobleche sind bekannt und werden darum auch nicht näher beschrieben. Auf das Elektroband 1 werden zur Bildung dieser Isolationsschichten 13 Lacke aufgetragen, die unterschiedliche Eigenschaften aufweisen können, die sich positiv auf die Schneidverfahren sowie die Paketierung bzw. Stapelung der Lamellen 2 auswirken.

Damit der Cyanacrylat-Klebstoff eine sichere Verbindung aufeinander liegender Lamellen 2 im Lamellenpaket 5 gewährleistet, wird auf die Isolationsschicht 13 eine Benetzungsschicht 14 aufgebracht. Sie ist so ausgebildet, dass eine gute Benetzung mit dem Cyanacrylat-Klebstoff erreicht wird, der pH-Wert auf der Oberfläche > 7 ist und der OH⁻-Anteil im Wasser überwiegt. Durch die gute Benetzbarkeit der Benetzungsschicht 14 bilden die Klebstofftropfen keine einzelnen Tropfen, sondern breiten sich flächig auf der Benetzungsschicht 14 aus. Dadurch ist gewährleistet, dass die Lamellen 2 innerhalb des Lamellenpaketes 5 sicher und fest miteinander verbunden werden.

Die Benetzungsschicht 14 wird bei der Ausführungsform gemäß Fig. 1 im Bereich zwischen der Haspel 10 und der Stanzvorrichtung 11 auf beide Seiten des Elektrobandes 1 mittels einer entsprechenden Auftrageinheit 15 aufgebracht. Der Auftrag kann durch Aufsprühen, durch Bürsten oder durch Polieren mit dem entsprechenden Medium vorgenommen werden.

Zur Herstellung der Benetzungsschicht 14 wird ein Schmierstoff herangezogen, der Dipropylenglykol sowie destilliertes und/oder entmineralisiertes und/oder deionisiertes Wasser enthält. Eine bevorzugte Zusammensetzung des Schmierstoffes ist:
30 bis 75 Gew.-% destilliertes und/oder entmineralisiertes und/oder deionisiertes Wasser
25 bis 70 Gew.-% Dipropylenglykol

Je nach Einsatzfall kann der Schmierstoff auch zusätzlich Polyglykolöl enthalten, dessen Anteil zwischen 0 und 20 Gew.-% liegen kann. Ist Polyglykolöl im Schmierstoff vorhanden, kann der Anteil an Dipropylenglykol und/oder an destilliertem und/oder entmineralisiertem und/oder deionisiertem Wasser entsprechend verringert werden.

Als Polyglykolöle kommen insbesondere Polyethylenglykole (PEG), Polyalkylenglykole (PAG) und Polypropylenglykole (PPG) in Betracht. Der pH-Wert der Polyglykolwerte liegt im alkalischen Bereich, also oberhalb von 7. Da der pH-Wert der Benetzungsschicht 14 im alkalischen Bereich liegt, kann in Verbindung mit der guten Benetzbarkeit nicht nur eine einwandfreie Verklebung benachbarter Lamellen 2 erreicht werden, sondern auch eine sehr kurze Aushärtezeit. Dadurch können hohe Stückzahlen bei der Herstellung der Lamellen 2 bzw. der Lamellenpakete 5 erreicht werden. Durch die Verwendung der Benetzungsschicht 14 können Aushärtezeiten von ungefähr einer Sekunde erreicht werden.

Der zusätzliche Schmierstoff hat darüber hinaus weitere vorteilhafte Eigenschaften. So kann er im Stanzprozess zur Erhöhung der Werkzeugstandzeit verwendet werden. Zudem dient der Schmierstoff auch zur Kühlung des Stanzprozesses.

Der Einsatz des beschriebenen Schmierstoffes führt somit in Kombination zu einer wirkungsvollen Verschleißminimierung der Stanzwerkzeuge und zur Verbesserung der Energieeffizienz im Stanzprozess aufgrund der Kühlwirkung.

Der beschriebene Schmierstoff ist wasserlöslich, so dass er einfach in der Handhabung ist. Die Benetzungsschicht 14 wirkt außerdem korrosionsschutzhemmend. Das Elektroband 1 oder auch das Elektroblech zeigen noch nach Wochen keine Korrosion.

Der beschriebene Schmierstoff hat darüber hinaus einen hervorragenden Viskositätsindex. Die Viskosität des Schmierstoffes nimmt mit steigender Temperatur nur wenig ab, so dass er auch bei höheren Temperaturen gleichbleibende Eigenschaften gewährleistet.

Der Schmierstoff enthält in der beschriebenen Weise deionisiertes oder auch demineralisiertes Wasser. Auch ein vollentsalztes Wasser kann eingesetzt werden. Demineralisiertes Wasser kann sehr einfach aus normalem Leitungswasser mit Hilfe von Ionenaustauschern gewonnen werden.

Wird vollentsalztes Wasser als Zusatz zum Polyglykolöl verwendet, dann wird durch Messung der Leitfähigkeit der Reinheitsgrad gemessen. Die hierzu erforderlichen Leitwertmessgeräte sind bekannt. Je geringer die Leitfähigkeit, gemessen in S/cm bzw. µS/cm, desto weniger Verunreinigungen enthält das Wasser.

Um einen optimalen Korrosionsschutz sowie hervorragende Schmiereigenschaften zu erreichen, wird das Elektroband 1 vorteilhaft über seine gesamte Ober- und Unterseite durch die Benetzungsschichten 14 abgedeckt. Durch das flächige Aufbringen wird das Stanzwerkzeug der Stanzvorrichtung 11 durch die Benetzungsschicht 14 geschmiert und gekühlt. Die Benetzungsschicht 14 wird beim Stanzvorgang durch das entsprechende Stanzwerkzeug über die Schnittfläche im Elektroband 1 bzw. im Elektroblech verteilt, wodurch die Schnittfläche gegen Korrosion geschützt ist.

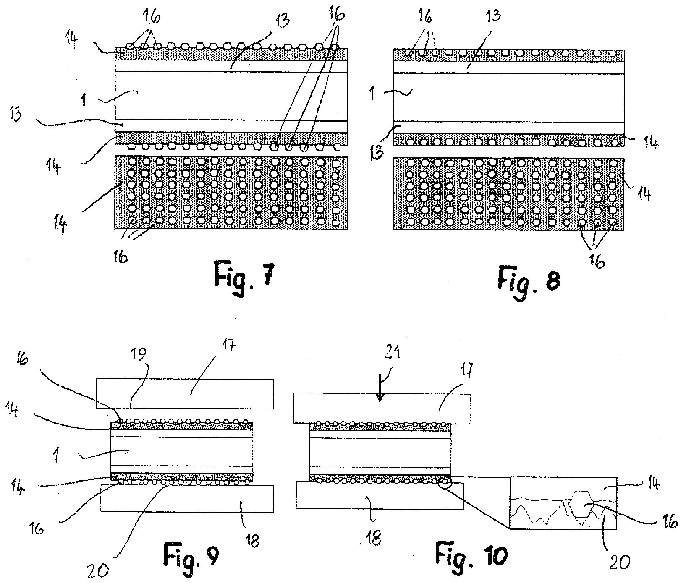

Fig. 7 und 8 zeigen in schematischer Darstellung Benetzungsschichten 14, die abrasive und Füllstoffe bzw. Festkörper 16, beispielsweise Diamantkörner, aufweisen. Die Füllstoffe 16 sind verteilt in der Benetzungsschicht 14 vorgesehen. Zusätzlich zu den beschriebenen Vorteilen der Benetzungsschicht 14 ergibt sich durch den Zusatz der Füllstoffe 16 eine Optimierung, d.h. eine Reduzierung der Oberflächenrauheit der Lamellen 2. Diese Optimierung bzw. Reduzierung ergibt sich beim Stanzprozess, wie anhand der Fig. 9 bis 10 erläutert werden soll. Bei der Ausführungsform nach Fig. 7 stehen die Füllstoffe 16 geringfügig über die Benetzungsschicht 14 vor, während sie beim Ausführungsbeispiel nach Fig. 8 vollständig in die Benetzungsschicht 14 eingebettet sind.

Fig. 9 zeigt schematisch eine Führungsplatte eines Werkzeugoberteiles sowie ein Werkzeugunterteil 18 der Stanzvorrichtung 11. Die beiden Werkzeugteile 17, 18 haben jeweils eine ebene Druckseite 19, 20.

Das Elektroband 1 oder auch das Elektroblech mit den auf seinen beiden Seiten vorgesehenen Benetzungsschichten 14 liegt auf der Druckseite 20 des Werkzeugunterteiles 18 auf. Das Werkzeugoberteil 17 hat Abstand vom Elektroband 1. Es wird in Pfeilrichtung 21 (Stanzrichtung) nach unten in Richtung auf das Werkzeugunterteil 18 bewegt.

Die beschriebene Führungsplatte des Werkzeugoberteiles 17 kann im Stanzwerkzeug selbst vorgesehen sein. Grundsätzlich besteht aber auch die Möglichkeit, die Führungsplatte getrennt vom Stanzwerkzeug in der Stanzvorrichtung 11 vorzusehen.

Bei der Verfahrensweise gemäß Fig. 1 wird mittels der Auftrageinheit 15 die Benetzungsschicht 14 auf beide Seiten des Elektrobandes vor dem Klebstoffauftrag aufgebracht. Der zusätzliche Schmierstoff Polyglykolöl der Benetzungsschicht 14 sorgt dafür, dass bei allen Stanzoperationen die guten Schmiereigenschaften zum Tragen kommen. Durch die Benetzungsschichten 14 auf beiden Seiten des Elektrobandes 1 wird außerdem eine reproduzierbare und prozesssichere Reaktion des Cyanacrylat-Klebstoffes infolge der basischen Benetzungsschicht 14 gewährleistet. Die Schnittflächen, die beim Stanzvorgang am Elektroband 1 entstehen, werden durch das Benetzungsmittel in der beschriebenen Weise bedeckt, so dass diese Schnittflächen vor Korrosion geschützt sind.

Während beim Ausführungsbeispiel nach Fig. 1 die Auftrageinheit 12 für den Klebestoff am Stanzwerkzeug vorgesehen ist, ist bei der Ausführungsform gemäß Fig. 2 auch die Auftrageinheit 15 für die Benetzungsschicht 14 zusammen mit der Auftrageinheit 12 für den Klebstoff am Stanzwerkzeug vorgesehen. Mit der Auftrageinheit 15 wird die Benetzungsschicht 14 auf beide Seiten des Elektrobandes 1 aufgebracht, das von der Haspel 10 abgewickelt wird. Der Auftrag des Materials der Benetzungsschichten 14 erfolgt vor dem Klebstoffauftrag. Dadurch ist sichergestellt, dass der Cyanacrylat-Klebstoff sicher reagieren kann.

Fig. 3 zeigt schematisch eine weitere Ausführungsform, bei welcher der Auftrag des Benetzungsmediums und des Klebstoffes innerhalb der Bremseinheit 7 der Stanzvorrichtung 11 vorgenommen wird. In diesem Falle wird auf die gestanzten Lamellen 2 zunächst die Benetzungsschicht 14 aufgetragen und anschließend der Klebstoff aufgebracht. Die Benetzungsschichten 14 bieten einen hohen Korrosionsschutz, auch der Schnittflächen, die durch das Stanzen an der Lamelle erzeugt werden. Auf den Benetzungsschichten 14 kann der Cyanacrylat-Klebstoff reproduzierbar und prozesssicher reagieren. In Fig. 3 sind die Auftrageinheiten 12 und 15 für den Klebstoff und das Benetzungsschicht-Material wiederum nur schematisch dargestellt. Das Elektroband 1 wird von der Haspel 10 abgewickelt.

Fig. 4 zeigt in schematischer Darstellung das innerhalb der Bremseinheit 7 befindliche Lamellenpaket 5. In der Bremseinheit 7 ist wenigstens ein Kühlkreislauf 22 untergebracht, über den ein Kühlmedium 23 gefördert wird, um das Lamellenpaket 5 zu kühlen. Das Kühlmedium befindet sich in einem Tank 24. Da in der Bremseinheit 7 das Lamellenpaket 5 in der beschriebenen Weise gebildet wird, steht ausreichend Zeit zur Verfügung, um die Lamellen 2 bzw. das Lamellenpaket 5 zu kühlen und außerdem den Cyanacrylat-Klebstoff zu aktivieren. Die Lamellen 2 sind, wenn das Lamellenpaket 5 der Bremseinheit 7 entnommen wird, fest und sicher miteinander verbunden.

Fig. 11 zeigt in schematischer Darstellung eine Vorrichtung, mit der die Benetzungsschicht 14 auf das Elektroband 1 aufgebracht werden kann. Das Elektroband 1 wird auf einer Haspel 10' aufgewickelt angeliefert. Das Elektroband 1 wird durch einen schematisch dargestellten Richtapparat 25 geführt, mit dem das Elektroband in bekannter Weise gerichtet wird. Das Elektroband 1 gelangt anschließend in eine Beschichtungsanlage 26, in der auf das Elektroband 1 die Beschichtung 13 (Fig. 6) auf beiden Seiten aufgebracht wird. In Vorschubrichtung des Elektrobandes 1 hinter der Beschichtungsanlage 26 befindet sich wenigstens eine Auftrageinheit 15, mit der auf die Beschichtung 13 in der beschriebenen Weise die Benetzungsschicht 14 aufgebracht wird. Die Auftrageinheit 15 ist so vorgesehen, dass sie auf beiden Seiten des Elektrobandes 1 die Benetzungsschicht 14 aufbringt. Anschließend wird das Elektroband 1 mit der Beschichtung 13 und der Benetzungsschicht 14 auf die Haspel 10 aufgewickelt. Sie wird dann zur Stanzvorrichtung 11 verbracht, mit der in der beschriebenen Weise die Lamellen 2 gestanzt und zum Lamellenpaket 5 gestapelt werden.

Fig. 12 zeigt schematisch eine Vorrichtung, bei der das Elektroband 1 von der Haspel 10' abgewickelt und durch eine Spaltanlage 27 geführt wird. Das Elektroband 1 ist im Unterschied zur Ausführungsform gemäß Fig. 11 bereits mit der Beschichtung 13 versehen. Das Elektroband 1 wird in Vorschubrichtung vor der Spaltanlage 27 mittels der mindestens einen Auftrageinheit 15 mit der Benetzungsschicht 14 versehen. In der Spaltanlage 27 wird das Elektroband 1 in bekannter Weise über seine Länge aufgespalten. Die so entstehenden Elektrobänder sind auf beiden Seiten beschichtet, mit der Benetzungsschicht 14 versehen und werden jeweils auf die Haspel 10 aufgewickelt. Die Haspel 10 wird zur Stanzvorrichtung 11 verbracht, mit der in der beschriebenen Weise die Lamellen 2 gestanzt sowie die Lamellenpakete 5 hergestellt werden.

## Patentansprüche

1. Verfahren zur Herstellung von Lamellenpaketen (5), bei dem Lamellen (2) aus einem flächigen Ausgangsprodukt (1) geschnitten werden, die zum Lamellenpaket gestapelt werden, wobei die Lamellen (2) im Lamellenstapel (5) durch ein Klebemittel miteinander verbunden sind,
**dadurch gekennzeichnet, dass** das Klebemittel ein hochtemperaturbeständiger Cyanacrylat-Klebstoff ist, der auf eine Benetzungsschicht (14) für den Klebstoff aufgebracht wird, die so eingestellt ist, dass ihr pH-Wert in einem Bereich >7 liegt und aus Dipropylenglykol, destilliertem und/oder entmineralisiertem und/oder deionisiertem Wasser besteht, und dass die Benetzungsschicht (14) auf einer elektrischen Isolationsschicht (13) vorgesehen ist, welche die Lamellen (2) bedeckt und auf beiden Seiten des Ausgangsproduktes (1) vorhanden ist.

2. Verfahren nach Anspruch 1,
**dadurch gekennzeichnet, dass** die Benetzungsschicht (14) zwischen etwa 30 bis etwa 75 Gew.-% destilliertes und/oder entmineralisiertes und/oder deionisiertes Wasser und etwa 25 bis etwa 70 Gew.-% Dipropylenglykol enthält.

3. Verfahren nach Anspruch 1 oder 2,
**dadurch gekennzeichnet, dass** die Benetzungsschicht (14) auf das Ausgangsprodukt (1) aufgesprüht wird.

4. Verfahren nach Anspruch 1 oder 2,
**dadurch gekennzeichnet, dass** die Benetzungsschicht (14) durch Bürsten auf das Ausgangsprodukt (1) aufgebracht wird.

5. Verfahren nach Anspruch 1 oder 2,
**dadurch gekennzeichnet, dass** die Benetzungsschicht (14) durch Polieren auf das Ausgangsprodukt (1) aufgebracht wird.

6. Verfahren nach einem der Ansprüche 1 bis 5,
**dadurch gekennzeichnet, dass** die Benetzungsschicht (14) vollflächig auf das Ausgangsprodukt (1) aufgebracht wird.

7. Verfahren nach einem der Ansprüche 1 bis 6,
**dadurch gekennzeichnet, dass** die Benetzungsschicht (14) auf beide Seiten des Ausgangsproduktes (1) aufgebracht wird.

8. Verfahren nach einem der Ansprüche 1 bis 7,
**dadurch gekennzeichnet, dass** die Benetzungsschicht (14) in Vorschubrichtung des Ausgangsproduktes (1) vor einer Stanzvorrichtung (11) auf das Ausgangsprodukt aufgebracht wird.

9. Verfahren nach einem der Ansprüche 1 bis 7,
**dadurch gekennzeichnet, dass** die Benetzungsschicht (14) mittels wenigstens einer an einem Stanzwerkzeug vorgesehenen Auftrageinheit (15) auf das Ausgangsprodukt (1) aufgebracht wird.

10. Verfahren nach einem der Ansprüche 1 bis 9,
**dadurch gekennzeichnet, dass** eine Auftrageinheit (12) für den Klebstoff am Stanzwerkzeug vorgesehen ist.

11. Verfahren nach einem der Ansprüche 1 bis 7,
**dadurch gekennzeichnet, dass** der Klebstoff und die Benetzungsschicht (14) auf die Lamelle (2) unmittelbar vor oder nach dem Ausstanzen aufgebracht werden.

12. Verfahren nach einem der Ansprüche 1 bis 7,
**dadurch gekennzeichnet, dass** die Benetzungsschicht (14) bei einem bandförmigen Ausgangsprodukt (1) in Vorschubrichtung des Ausgangsproduktes (1) nach dem Beschichten und vor dem Aufwickeln auf eine Haspel (10) auf das Ausgangsprodukt (1) aufgebracht wird.

13. Verfahren nach einem der Ansprüche 1 und 7, **dadurch gekennzeichnet,**
**dass** die Benetzungsschicht (14) bei einem bandförmigen Ausgangsprodukt (1) in Vorschubrichtung des Ausgangsproduktes (1) vor dem Spalten des Bandes aufgebracht wird.

## Claims

1. A method for manufacturing lamella packets (5), in which lamellae (2) are cut out of a flat starting product (1) and stacked into a lamella packet, wherein the lamellae (2) in the lamella stack (5) are connected with each other by an adhesive,
**characterized in that** the adhesive is a high temperature-resistant cyanoacrylate glue, which is applied to a wetting layer (14) for the glue, which is set in such a way that its pH value lies within a range >7 and consists of dipropylene glycol, distilled and/or demineralized and/or deionized water, and that the wetting layer (14) is provided on an electrical insulation layer (13), which covers the lamellae (2) and is present on both sides of the starting product (1).

2. The method according to claim 1,
**characterized in that** the wetting layer (14) contains between about 30 to about 75 %w/w distilled and/or demineralized and/or deionized water and about 25 to about 70 %w/w dipropylene glycol.

3. The method according to claim 1 or 2,
**characterized in that** the wetting layer (14) is sprayed onto the starting product (1).

4. The method according to claim 1 or 2,
**characterized in that** the wetting layer (14) is applied to the starting product (1) by brushing.

5. The method according to claim 1 or 2,
**characterized in that** the wetting layer (14) is applied to the starting product (1) by polishing.

6. The method according to one of claims 1 to 5,
**characterized in that** the wetting layer (14) is applied to the starting product (1) over the entire surface.

7. The method according to one of claims 1 to 6,
**characterized in that** the wetting layer (14) is applied to the starting product (1) on both sides.

8. The method according to one of claims 1 to 7,
**characterized in that** the wetting layer (14) is applied to the starting product in the feed direction of the starting product (1) before a punching device (11).

9. The method according to one of claims 1 to 7,
**characterized in that** the wetting layer (14) is applied to the starting product (1) by means of at least one application unit (15) provided on a punching tool.

10. The method according to one of claims 1 to 9,
**characterized in that** an application unit (12) for the glue is provided on the punching tool.

11. The method according to one of claims 1 to 7,
**characterized in that** the glue and the wetting layer (14) are applied to the lamella (2) immediately before or after the stamping out process.

12. The method according to one of claims 1 to 7,
**characterized in that**, given a tape-shaped starting product (1), the wetting layer (14) is applied to the starting product (1) in the feed direction of the starting product (1) after the coating process and before winding on a reel (10).

13. A method according to one of claims 1 and 7,
**characterized in that**,
given a tape-shaped starting product (1), the wetting layer (14) is applied in the feed direction of the starting product (1) before splitting the tape.

## Revendications

1. Procédé pour la fabrication de paquets de lamelles (5), dans lequel les lamelles (2) sont découpées à partir d'un produit initial plat (1) et empilées de manière à obtenir les paquets de lamelles, dans lequel les lamelles (2) dans la pile de lamelles (5) sont reliées entre elles au moyen d'une colle,
**caractérisé en ce que** la colle est une colle de cyanoacrylate résistante aux températures élevées, laquelle est appliquée sur une couche de mouillage (14) pour la colle, laquelle est définie de manière à ce que sa valeur de pH soit comprise dans une plage supérieure à 7 et constituée de dipropylène-glycol, d'eau distillée et/ou déminéralisée et/ou déionisée, et **en ce que** la couche de mouillage (14) est prévue sur une couche d'isolation électrique (13), laquelle recouvre les lamelles (2) et est présente sur les deux côtés du produit initial (1).

2. Procédé selon la revendication 1,
**caractérisé en ce que** la couche de mouillage (14) contient entre environ 30 et environ 75 % en poids d'eau distillée et/ou déminéralisée et/ou déionisée et entre environ 25 et environ 70 % en poids de dipropylène-glycol.

3. Procédé selon la revendication 1 ou 2,
**caractérisé en ce que** la couche de mouillage (14) est pulvérisée sur le produit initial (1).

4. Procédé selon la revendication 1 ou 2,
**caractérisé en ce que** la couche de mouillage (14) est appliquée par des brosses sur le produit initial (1).

5. Procédé selon la revendication 1 ou 2,
**caractérisé en ce que** la couche de mouillage (14) est appliquée par polissage sur le produit initial (1).

6. Procédé selon l'une des revendications 1 à 5,
**caractérisé en ce que** la couche de mouillage (14) est appliquée sur toute la surface du produit initial (1).

7. Procédé selon l'une des revendications 1 à 6,
**caractérisé en ce que** la couche de mouillage (14) est appliquée sur les deux côtés du produit initial (1).

8. Procédé selon l'une des revendications 1 à 7,
**caractérisé en ce que** la couche de mouillage (14) est appliquée sur le produit initial en amont d'un dispositif de découpage (11) dans le sens d'avancement du produit initial (1).

9. Procédé selon l'une des revendications 1 à 7,
**caractérisé en ce que** la couche de mouillage (14) est appliquée sur le produit initial (1) au moyen d'au moins une unité de dépôt (15) prévue sur un outil de découpage.

10. Procédé selon l'une des revendications 1 à 9,
**caractérisé en ce qu'**il est prévu une unité de dépôt (12) pour la colle sur l'outil de découpage.

11. Procédé selon l'une des revendications 1 à 7,
**caractérisé en ce que** la colle et la couche de mouillage (14) sont appliquées sur la lamelle (2) immédiatement avant ou après le découpage.

12. Procédé selon l'une des revendications 1 à 7,
**caractérisé en ce que** la couche de mouillage (14), dans le cas d'un produit initial (1) en forme de bande, est appliquée sur le produit initial (1) dans le sens d'avancement du produit initial (1), après l'enduction et avant l'enroulement sur un dévidoir (10).

13. Procédé selon l'une des revendications 1 et 7,
**caractérisé en ce que** dans le cas d'un produit initial (1) en forme de bande, la couche de mouillage (14) est appliquée dans le sens d'avancement du produit initial (1) avant la division de la bande.
